(19) Europäisches Patentamt
European Patent Office
Office européen des brevets

(11) EP 2 048 166 B1

(12) **EUROPEAN PATENT SPECIFICATION**

(45) Date of publication and mention of the grant of the patent:
**26.02.2014 Bulletin 2014/09**

(21) Application number: **07790753.3**

(22) Date of filing: **13.07.2007**

(51) Int Cl.:
***C08F 4/651*** *(2006.01)* ***C08F 10/00*** *(2006.01)*

(86) International application number:
**PCT/JP2007/063972**

(87) International publication number:
**WO 2008/010459 (24.01.2008 Gazette 2008/04)**

# (54) SOLID TITANIUM CATALYST INGREDIENT, CATALYST FOR OLEFIN POLYMERIZATION, AND METHOD OF OLEFIN POLYMERIZATION

FESTER TITANKATALYSATORBESTANDTEIL, KATALYSATOR FÜR DIE OLEFINPOLYMERISATION UND VERFAHREN ZUR OLEFINPOLYMERISATION

INGRÉDIENT CATALYSEUR AU TITANE SOLIDE, CATALYSEUR DE POLYMÉRISATION D'OLÉFINE, ET PROCÉDÉ DE POLYMÉRISATION D'OLÉFINE

(84) Designated Contracting States:
**DE FR GB IT NL**

(30) Priority: **18.07.2006 JP 2006195732**

(43) Date of publication of application:
**15.04.2009 Bulletin 2009/16**

(73) Proprietor: **Mitsui Chemicals, Inc.**
**Tokyo 105-7117 (JP)**

(72) Inventors:
- **MATSUNAGA, Kazuhisa**
**Yamaguchi 740-0061 (JP)**
- **TSURU, Kazutaka**
**Yamaguchi 740-0061 (JP)**
- **SHINOZAKI, Tetsunori**
**Yamaguchi 740-0061 (JP)**

(74) Representative: **Benson, John Everett**
**J A Kemp**
**14 South Square**
**Gray's Inn**
**London WC1R 5JJ (GB)**

(56) References cited:
**JP-A- 06 122 716**
**JP-A- 08 157 521**
**JP-A- 2005 517 746**
**JP-A- 2005 531 675**
**US-A1- 2005 239 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 048 166 B1

## Description

### Technical Field

The present invention relates to a solid titanium catalyst component which is preferably used for the polymerization of an α-olefin having 3 or more carbon atoms. Further, the present invention relates to a catalyst for olefin polymerization containing the solid titanium catalyst component. Furthermore, the present invention relates to a method of olefin polymerization using the catalyst for olefin polymerization.

### Background Art

As a catalyst used for producing ethylene, a homopolymer of an α-olefin or an olefin polymer such as an ethylene-α-olefin copolymer, there has been conventionally known a catalyst containing a titanium compound supported on activated magnesium halide (hereinafter, "homopolymerization" and "copolymerization" may be described as "polymerization").

As such a catalyst for olefin polymerization, there have been widely known a catalyst containing titanium tetrachloride and titanium trichloride which is referred to as a Ziegler-Natta catalyst, a catalyst composed of a solid titanium catalyst component composed of magnesium, titanium, halogen and an electron donor, and an organometallic compound.

The latter catalyst shows high activity to the polymerization of an α-olefin such as propylene, and 1-butene in addition to ethylene. In addition, the resulting α-olefin polymer may have high stereoregularity.

It is reported in Japanese Patent Laid-Open Publication No. S57-63310 (Patent Document 1) and others that among these catalysts, when a catalyst composed of a solid titanium catalyst component supported with an electron donor selected from carboxylic acid esters typically exemplified by phthalic acid esters, an aluminum-alkyl compound as a co-catalyst component, and a silicon compound having at least one Si-OR (wherein R is a hydrocarbon group) is particularly used, excellent polymerization activity and stereospecificity are exhibited.

A polymer obtained by using the catalyst frequently has a molecular weight distribution narrower than that of a polymer obtained by using a Ziegler-Natta catalyst. It is known that the polymer having a narrow molecular weight distribution tends to have "a low melt flowability", "a low melt tension", "a poor moldability", and "a slightly low rigidity". On the other hand, from the viewpoints of productivity improvement, and reduction in cost, there have been advanced various high speed molding technologies such as, for example, high speed stretching technologies for the purpose of improving the productivity of a stretched film.

When an attempt is made to stretch a polymer having a relatively narrow molecular weight distribution at a high speed, the neck-in or flapping of the film may become more noticeable due to the shortage of melt tension, making it difficult to improve the productivity in some cases. Therefore, a polymer having a higher melt tension has been demanded by the market.

In order to solve these problems, there have been many reports on a method for broadening the molecular weight distribution of polymers by producing the polymers having different molecular weights by a multi-stage polymerization (Japanese Patent Laid-Open Publication No. H05-170843 (Patent Document 2)), a catalyst containing plural kinds of electron donors (Japanese Patent Laid-Open Publication No. H03-7703 (Patent Document 3)), a catalyst using a succinic acid ester having an asymmetric carbon as the electron donor contained in a solid titanium catalyst component (International Publication WO 2001/057099 (Patent Document 4), International Publication WO 2000/63261 (Patent Document 5), International Publication WO 2002/30998 (Patent Document 6)).

In addition, Japanese Patent Application Laid-Open No. 2005-517746 (Patent Document 7) describes that there is a disclosure in Patent Documents 4 to 6 that a catalyst containing a carboxylic acid ester having a divalent or more valent ester group gives a polyolefin having a broad molecular weight distribution.

Patent Document 1: Japanese Patent Laid-Open Publication No S57-63310
Patent Document 2: Japanese Patent Laid-Open Publication No H05-170843
Patent Document 3: Japanese Patent Laid-Open Publication No H03-7703
Patent Document 4: International Publication WO 2001/057099
Patent Document 5: International Publication WO 2000/63261
Patent Document 6: International Publication WO 2002/30998
Patent Document 7: Japanese Patent Application Laid-Open No. 2005-517746

Disclosure of the Invention

Problems to be Solved by the Invention

However, the catalysts are catalysts which have an insufficient effect of broadening the molecular weight distribution of a olefin polymer, and according to the studies conducted by the present inventors, broaden the molecular weight distribution by increasing the content of the low molecular weight components. On the other hand, there is an evaluation by the market that it is not said that these catalysts is insufficient in improvement of the melt tension of the olefin polymer. Further, from the viewpoint of the cost reduction, a catalyst capable of producing an olefin polymer having a molecular weight distribution broadened by a simpler process has been expected by the market.

Therefore, it is an object of the present invention to provide a catalyst component and a catalyst which are capable of conveniently producing an olefin polymer having a broad molecular weight distribution and a high melt tension, and being more suitable for high speed stretch and high speed molding.

Means to Solve the Problems

As a result of the earnest studies, the present inventors have found that an olefin polymer having a broad molecular weight distribution is produced when a solid titanium catalyst component containing a specific polycarboxylic acid ester compound having a divalent or more valent ester group with an alicyclic structure is use, and thus have completed the present invention.

A solid titanium catalyst component (I) of the present invention is characterized by containing titanium, magnesium, a halogen and a cyclic polyvalent ester group-containing compound (a) specified by the following formula (1).

[Chemical Formula 1]

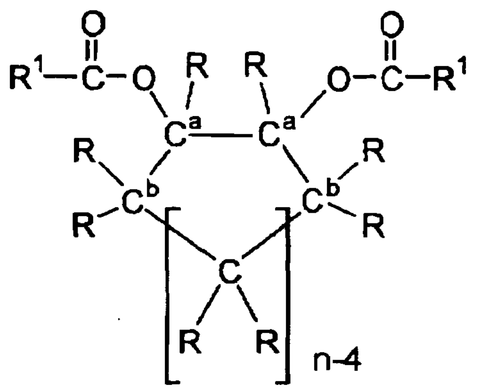

(1)

In Formula (1), n is an integer of 5 to 10.

$C^a$-$C^a$ and $C^a$-$C^b$ are C-C.

A plurality of $R^1$s are each independently a monovalent hydrocarbon group having 1 to 20 carbon atoms.

A plurality of Rs are each independently an atom or a group selected from a hydrogen atom, a hydrocarbon group having 1 to 20 carbon atoms, a halogen atom, a nitrogen-containing group, an oxygen-containing group, a phosphorus-containing group, a halogen-containing group and a silicon-containing group, and may be mutually bonded to form a ring.

A double bond may be contained in a skeleton of the ring formed by the mutual bonding of Rs. When two $C^a$s to which $OCOR^1$ is attached are contained in the skeleton of the ring, the number of carbon atoms constituting the skeleton of the ring is 5 to 10.

In the formula (1), at least one among the plurality of Rs directly bonding to $C^b$ is preferably a group other than a hydrogen atom.

In the formula (1), bonds between the carbon atoms in the cyclic skeleton are all preferably single bonds.

In the formula (1), the cyclic skeleton is preferably composed of six carbon atoms.

As the cyclic polyvalent ester group-containing compound (a), a compound represented by the following formula (1a) is preferred.

[Chemical Formula 2]

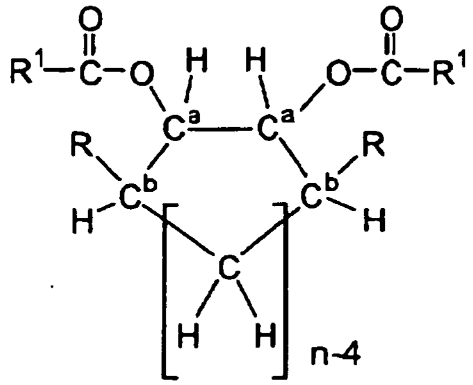

(1a)

In the formula (1a), n is an integer of 5 to 10.

The single bond (provided that the $C^a$-$C^a$ bond and $C^a$-$C^b$ bond are excluded) in the cyclic skeleton may be replaced by a double bond.

A plurality of $R^1$s are each independently a monovalent hydrocarbon group having 1 to 20 carbon atoms.

A plurality of Rs are each independently an atom or a group selected from a hydrogen atom, a hydrocarbon group having 1 to 20 carbon atoms, a halogen atom, a nitrogen-containing group, an oxygen-containing group, a phosphorus-containing group, a halogen-containing group and a silicon-containing group, and may be mutually bonded to form a ring.

A double bond may be contained in the skeleton of the ring formed by the mutual bonding of Rs. When two $C^a$s are contained in the skeleton of the ring, the number of carbon atoms constituting the skeleton of the ring is 5 to 10.

The catalyst for olefin polymerization of the present invention is characterized by containing the solid titanium catalyst component (I) and an organometallic compound catalyst component (II) containing a metal element selected from Group I, Group II and Group XIII of the periodic table.

The catalyst for olefin polymerization of the present invention may further contain an electron donor (III).

The olefin polymerization method of the present invention is characterized in that the olefin polymerization is carried out in the presence of the catalyst for olefin polymerization.

Effects of the Invention

A solid titanium catalyst component, a catalyst for olefin polymerization and a method for producing an olefin polymer of the present invention are suitable for producing an olefin polymer having high stereoregularity and a broad molecular weight distribution with high activity.

In addition, when a solid titanium catalyst component, a catalyst for olefin polymerization and a method for producing an olefin polymer of the invention are used, an olefin polymer that has, for example, excellent rigidity in addition to the moldability such as high speed stretchability and high speed moldability is expected to be produced.

Brief Description of the Drawings

[Fig. 1]
Fig.1 is a figure showing the relationship between the addition amount of hydrogen and MFR in the production of an olefin polymer of Examples.

Best Mode for Carrying Out the Invention

Hereinafter, there will be explained in more detail a solid titanium catalyst component (I), a catalyst for olefin polymerization and a method for producing an olefin polymer according to the present invention.

Solid Titanium Catalyst Component (I)

The solid titanium catalyst component (I) according to the present invention is characterized by containing titanium, magnesium, a halogen and a cyclic polyvalent ester group-containing compound (a).

<Cyclic Polyvalent Ester Group-containing Compound (a)>

The cyclic polyvalent ester group-containing compound (a) is represented by the following formula (1).

[Chemical Formula 3]

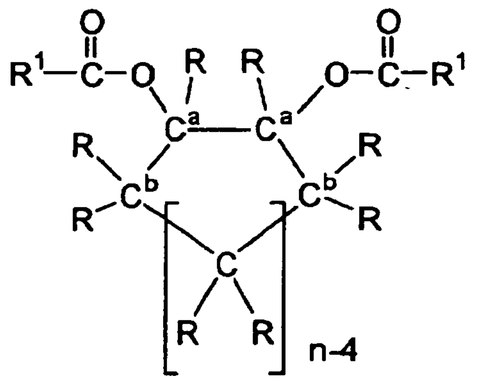

(1)

In the formula (1), n is an integer of 5 to 10, preferably 5 to 7 and especially preferably 6. In addition, $C^a$ represents a carbon atom.

$C^a$-$C^a$ and $C^a$-$C^b$ are C-C.

A plurality of $R^1$s are each independently a monovalent hydrocarbon group having 1 to 20 carbon atoms, preferably 1 to 10 carbon atoms, more preferably 2 to 8 carbon atoms, still more preferably 4 to 8 carbon atoms and particularly preferably 4 to 6 carbon atoms. The hydrocarbon group includes an ethyl group, an n-propyl group, an isopropyl group, an n-butyl group, an isobutyl group, a hexyl group, a heptyl group, an octyl group, a 2-ethylhexyl group, a decyl group, a dodecyl group, a tetradecyl group, a hexadecyl group, an octadecyl group, and an eicosyl group, and among these, an n-butyl group, an isobutyl group, a hexyl group and an octyl group are preferred, and more preferred are an n-butyl group and an isobutyl group.

A plurality of Rs are each independently an atom or a group selected from a hydrogen atom, a hydrocarbon group having 1 to 20 carbon atoms, a halogen atom, a nitrogen-containing group, an oxygen-containing group, a phosphorus-containing group, a halogen-containing group and a silicon-containing group, and at least one of Rs is preferably a group other than a hydrogen atom.

As the R other than a hydrogen atom, among these, a hydrocarbon group having 1 to 20 carbon atoms is preferred, and the hydrocarbon group having 1 to 20 carbon atoms includes an aliphatic hydrocarbon group, an alicyclic hydrocarbon group and an aromatic hydrocarbon group such as a methyl group, an ethyl group, an n-propyl group, an isopropyl group, an n-butyl group, an isobutyl group, a sec-butyl group, an n-pentyl group, a cyclopentyl group, an n-hexyl group, a cyclohexyl group, a vinyl group, a phenyl group, and an octyl group. Among these, an aliphatic hydrocarbon group is preferred, and specifically a methyl group, an ethyl group, an n-propyl group, an isopropyl group, an n-butyl group, an isobutyl group and a sec-butyl group are preferred.

In addition, Rs may be mutually bonded to form a ring and a double bond may be contained in the skeleton of the ring formed by mutually bonding Rs. When two or more $C^a$s to which $OCOR^1$ is attached are contained in the skeleton of the ring, the number of carbon atoms constituting the skeleton of the ring is 5 to 10.

Such a skeleton of the ring includes a norbornane skeleton, and a tetracyclododecene skeleton.

Further, a plurality of Rs may be a carboxylic acid ester group, an alkoxy group, a siloxy group, an aldehyde group and an acetyl group, and a carbonyl structure-containing group such as an oxycarbonylalkyl group. These substituents preferably contain one or more hydrocarbon groups.

The cyclic polyvalent ester group-containing compound (a) includes cyclohexyl-1,2-diacetate, cyclohexyl-1,2-dipropionate, cyclohexyl-1,2-dibutanate, cyclohexyl-1,2-dihexanate, cyclohexyl-1,2-dioctanate, cyclohexyl-1,2-didecanate, cyclohexyl-1,2-dibenzoate, cyclohexyl-1,2-ditoluate, cyclopentyl-1,2-diacetate, cyclopentyl-1,2-dibutanate, cyclopentyl-1,2-dibenzoate, cyclopentyl-1,2-ditoluate, cycloheptyl-1,2-diacetate, cycloheptyl-1,2-dibutanate, cycloheptyl-1,2-dibenzoate, cycloheptyl-1,2-ditoluate, 3-methylcyclohexyl-1,2-diacetate, 3-methylcyclohexyl-1,2-dipropionate, 3-methylcyclohexyl-1,2-dibutanate, 3-methylcyclohexyl-1,2-dihexanate, 3-methylcyclohexyl-1,2-dioctanate, 3-methylcyclohexyl-1,2-didecanate, 3-methylcyclohexyl-1,2-dibenzoate, 3-methylcyclohexyl-1,2-ditoluate, 3-methylcyclopentyl-1,2-diacetate, 3-n-propylcyclopentyl-1,2-dibutanate, 3-methylcyclopentyl-1,2-dibenzoate, 3-n-propylcyclopentyl-1,2-ditoluate, 3-methylcycloheptyl-1,2-diacetate, 3-n-propylcycloheptyl-1,2-dibutanate, 3-methylcycloheptyl-1,2-dibenzoate, 3-n-propylcycloheptyl-1,2-ditoluate, 3,6-dimethylcyclohexyl-1,2-diacetate, 3-methyl-6-propylcyclohexyl-1,2-dibutanate, 3,6-dimethylcyclohexyl-1,2-dibenzoate, 3-methyl-6-propylcyclohexyl-1,2-ditoluate, 3,5-dimethylcyclopentyl-1,2-diacetate, 3-methyl-5-propylcyclopentyl-1,2-dibutanate, 3,7-dimethylcycloheptyl-1,2-dibenzoate, and 3-methyl-7-propylcycloheptyl-1,2-ditoluate.

Further, the cyclic polyvalent ester group-containing compound (a) includes, in addition to the dicarbonates described above, an asymmetric compound such as 1-oxycarbonylmethyl, 2-oxycarbonylbutyl-3,6-dimethylcyclohexane, 1-oxycarbonylmethyl-2-oxycarbonylbutylcyclohexane, 1-oxycarbonylmethyl-2-oxycarbonylphenylcyclohexane, and 1-oxycarbonylmethyl-2-oxycarbonylphenyl-3-methyl-6-propyl cyclohexane.

Among the compounds above, a compound in which R is a hydrocarbon group is preferable because a solid titanium catalyst component having high activity and stereoregularity tends to be easily obtained.

In addition, among the compounds above, a compound in which at least one of plural Rs directly bonding to $C^b$ is a group other than a hydrogen atom is preferable in that an olefin polymer having the same broad molecular weight distribution and higher stereoregularity with higher activity is obtained. The compound specifically includes

3-methylcyclohexyl-1,2-diacetate,
3-methylcyclohexyl-1,2-dipropionate,
3-methylcyclohexyl-1,2-dibutanate,
3-methylcyclohexyl-1,2-dihexanate,
3-methylcyclohexyl-1,2-dioctanate,
3-methylcyclohexyl-1,2-didecanate,
3-methylcyclohexyl-1,2-dibenzoate,
3-methylcyclohexyl-1,2-ditoluate,
3,6-dimethylcyclohexyl-1,2-diacetate,
3-methyl-6-propylcyclohexyl-1,2-dibutanate,
3,6-dimethylcyclohexyl-1,2-dibenzoate, and
3-methyl-6-propylcyclohexyl-1,2-ditoluate.

Among the compounds having the diester structure described above, there is a cis-, or trans- isomer derived from the plural $OCOR^1$ groups in the Formula (1), any of which has effects conforming to the purpose of the present invention and a compound having a higher content of the trans isomer is preferred. The compound having a higher content of the trans-isomer has not only the effect of broadening the molecular weight distribution but also higher activity and the tendency to have higher stereoregularity in the resulting polymer.

As the cyclic polyvalent ester group-containing compound (a), a compound in which a substituent is bonded to a carbon adjacent to $C^a$ is preferred and a compound represented by the following formula (1a) is especially preferred.

[Chemical Formula 4]

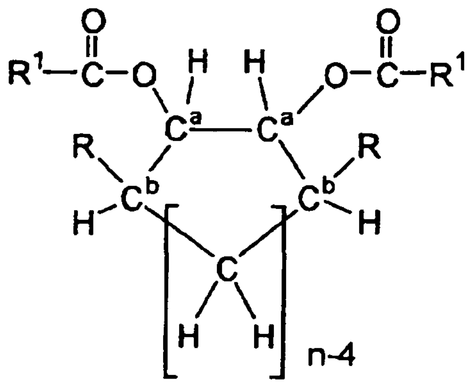

(1a)

In the formula (1a), n, $R^1$, R, $C^a$-$C^a$ and $C^a$-$C^b$ are the same as above.

A compound in which at least one of plural Rs directly bonded to $C^b$ is a group other than a hydrogen atom is

preferable in that an olefin polymer having the same broad molecular weight distribution and higher stereoregularity with higher activity is obtained.

As preferable examples of the compound represented by the formula (1a), there may be mentioned

3,6-dimethylcyclohexyl-1,2-diacetate,
3,6-dimethylcyclohexyl-1,2-dibutanate,
3-methyl-6-propylcyclohexyl-1,2-diolacetate,
3-methyl-6-propylcyclohexyl-1,2-dibutanate,
3,6-dimethylcyclohexyl-1,2-dibenzoate,
3,6-dimethylcyclohexyl-1,2-ditoluate,
3-methyl-6-propylcyclohexyl-1,2-dibenzoate, and
3-methyl-6-propylcyclohexyl-1,2- ditoluate.

These compounds may be used alone or in combination with two or more kinds thereof. In addition, these cyclic polyvalent ester group-containing compounds (a) may be used in combination with a catalyst component (b) or catalyst component (c) which is described later as long as the objective of the present invention is not impaired.

Further, the cyclic polyvalent ester group-containing compound (a) may be formed during the process of preparing solid titanium catalyst component (I). For example, in preparing the solid titanium catalyst component (I), the cyclic polyvalent ester group-containing compound (a) may be contained in the solid titanium catalyst component by providing a process of substantially bringing an anhydrous carboxylic acid or carboxylic acid dihalide corresponding to the catalyst component (a) into contact with the corresponding polyol.

A polymer having a broad molecular weight distribution is obtained by a method for producing an olefin polymer of the present invention. The reason for this is unknown at present, but the following causes are assumed.

It is known that a cyclic hydrocarbon structure forms a variety of steric structures such as a chair conformation, and a boat conformation. Further, when the cyclic structure has a substituent, the variation of a possible steric structure is further increased. In addition, if the $C^a$-$C^a$ bond and $C^a$-$C^b$ bond connecting multiple ester groups ($OCOR^1$ groups) is a single bond, the variation of a possible steric structure is increased. Since the cyclic hydrocarbon structure may form these various steric structures, various active species are formed on the solid titanium catalyst component (I). As a result, when the olefin polymerization is carried out by using the solid titanium catalyst component (I), olefin polymers having various molecular weights may be produced at one time, that is, olefin polymers having broad molecular weight distributions may be produced.

For the preparation of the solid titanium catalyst component (I) of the present invention, a magnesium compound and a titanium compound are used in addition to the cyclic polyvalent ester group-containing compound (a).

<u><Magnesium Compound></u>

The specific examples of the magnesium compound includes a well-known magnesium compound such as a halogenated magnesium such as magnesium chloride, and magnesium bromide; an alkoxymagnesium halide such as methoxymagnesium chloride, ethoxymagnesium chloride, and phenoxymagnesium chloride, an alkoxymagnesium such as ethoxymagnesium, isopropoxymagnesium, butoxymagnesium, and 2-ethylhexoxymagnesium; an aryloxymagnesium such as phenoxymagnesium; a magnesium carboxylate such as magnesium stearate.

These magnesium compounds may be used alone or in combination with two or more kinds thereof. In addition, these magnesium compounds may be a complex or a composite compound with other metals, or a mixture with other metal compounds.

Among these, a halogen-containing magnesium compound is preferred, and magnesium halide, especially magnesium chloride is preferably used. In addition to these compounds, an alkoxymagnesium such as ethoxymagnesium is preferably used. Further, the magnesium compound may be the one derived from other materials, for example, the one obtained by bringing an organomagnesium compound such as a Grignard reagent into contact with titanium halide, silicon halide, or alcohol halide.

<u><Titanium Compound></u>

The titanium compound includes, for example, a tetravalent titanium compound represented by the following formula:

$$Ti(OR)_g X_{4-g}$$

R is a hydrocarbon group, X is a halogen atom and g satisfies the condition $0 \leq g \leq 4$. More specifically, the titanium

compound includes a titanium tetrahalide such as $TiCl_4$, and $TiBr_4$; an alkoxytitanium trihalide such as Ti $(OCH_3)$ $Cl_3$, $Ti(OC_2H_5)Cl_3$, $Ti(O\text{-}n\text{-}C_4H_9)Cl_3$, $Ti(OC_2H_5)Br_3$, and $Ti(O\text{-}isoC_4H_9)Br_3$; an alkoxytitanium dihalide such as $Ti(OCH_3)_2Cl_2$, and Ti $(OC_2H_5)_2Cl_2$; an alkoxytitanium monohalide such as $Ti(OCH_3)_3Cl$, $Ti(O\text{-}n\text{-}C_4H_9)_3Cl$, and $Ti(OC_2H_5)_3Br$; a tetraalkoxytitanium such as Ti $(OCH_3)_4$, Ti $(OC_2H_5)_4$, Ti $(OC_4H_9)_4$, and $Ti(O\text{-}2\text{-}ethylhexyl)_4$.

Among these, a titanium tetrahalide is preferred, and particularly titanium tetrachloride is preferred. These titanium compounds may be used alone or in combination of two or more kinds thereof.

The magnesium compounds and titanium compounds described above include, for example, those as described in detail in Patent Document 1, or Patent Document 2.

For the preparation of the solid titanium catalyst component (I) used in the present invention, a well-known method may be employed without limitation except for using the cyclic polyvalent ester group-containing compound (a). The specifically preferable method includes, for example, the following methods (P-1) to (P-4).

(P-1) A method of bringing a solid adduct composed of a magnesium compound and a catalyst component (b), a cyclic polyvalent ester group-containing compound (a) and a liquid-state titanium compound into contact with one another in a suspended state in the coexistence of an inert hydrocarbon solvent.

(P-2) A method of bringing a solid adduct composed of a magnesium compound and a catalyst component (b), a cyclic polyvalent ester group-containing compound (a) and a liquid-state titanium compound into contact with one another in plural stages.

(P-3) A method of bringing a solid adduct composed of a magnesium compound and a catalyst component (b), a cyclic polyvalent ester group-containing compound (a) and a liquid-state titanium compound into contact with one another in a suspended state and in plural stages in the coexistence of an inert hydrocarbon solvent.

(P-4) A method of bringing a liquid-state magnesium compound composed of a magnesium compound and a catalyst component (b), a liquid-state titanium compound and a cyclic polyvalent ester group-containing compound (a) into contact with one another.

The reaction temperature for the preparation of the solid titanium catalyst component (I) is preferably from -30 to 150°C, more preferably from -25 to 130°C and further more preferably from -25 to 120°C.

In addition, the production of the solid titanium catalyst component may be carried out in the presence of a well-known medium where necessary. The medium includes an aromatic hydrocarbon such as toluene having some polarity, a well-known aliphatic hydrocarbon or alicyclic hydrocarbon compound such as heptane, octane, decane, and cyclohexane. Among these, a preferred example is an aliphatic hydrocarbon.

If the reaction is carried out within the range, the effect of obtaining a polymer having a broad molecular weight distribution is highly compatible with the activity and stereoregularity of the resulting polymer.

<u>(Catalyst Component (b))</u>

As the catalyst component (b) used for the formation of the solid adduct or the liquid-state magnesium compound, a well-known compound which can solubilize the magnesium compound in the temperature range of room temperature to approximately 300°C is preferred, and for example, an alcohol, an aldehyde, an amine, carboxylic acids and a mixture thereof, are preferred. These compounds include, for example, those as described in detail in Patent Document 1 or Patent Document 2.

As the alcohol having ability to solubilize the magnesium compound, there may be mentioned, more specifically, an aliphatic alcohol such as methanol, ethanol, propanol, butanol, isobutanol, ethylene glycol, 2-methylpentanol, 2-ethylbutanol, n-heptanol, n-octanol, 2-ethylhexanol, decanol, and dodecanol; an alicyclic alcohol such as cyclohexanol, and methylcyclohexanol; an aromatic alcohol such as benzyl alcohol, and methylbenzyl alcohol; an aliphatic alcohol having an alkoxy group such as n-butylcellosolve; and others.

The carboxylic acid includes organic carboxylic acids having 7 or more carbon atoms such as caprylic acid, and 2-ethylhexanoic acid. The aldehyde includes aldehydes having 7 or more carbon atoms such as capric aldehyde, and 2-ethylhexylaldehyde.

The amine includes amines having 6 or more carbon atoms such as heptylamine, octylamine, nonylamine, laurylamine, and 2-ethylhexylamine.

As the catalyst component (b), the alcohols are preferred, and particularly ethanol, propanol, butanol, isobutanol, hexanol, 2-ethylhexanol, and decanol are preferred.

The used amounts of the magnesium compound and catalyst component (b) in preparing the solid adduct or liquid-state magnesium compound vary depending on the kinds thereof, or the contact conditions. The magnesium compound is used in an amount of 0.1 to 20 mol/liter and preferably 0.5 to 5 mol/liter per unit volume of the catalyst component (b). Further, a medium which is inert to the solid adduct may also be used at the same time where necessary. The preferred example of the medium includes a well-known hydrocarbon compound such as heptane, octane, and

decane.

The composition ratio of the magnesium of the resulting solid adduct or the liquid-state magnesium compound to the catalyst component (b) varies depending on the kinds of the compound to be used and thus cannot be generally defined. However, the amount of the catalyst component (b) is in the range of preferably 2.0 moles or more, more preferably 2.2 moles or more, further more preferably 2. 6 moles or more and particularly preferably 2. 7 moles or more and 5 moles or less, based on one mole of magnesium in the magnesium compound.

<Aromatic Carboxylic Acid Ester and/or Compound having Two or More Ether Linkages through a Plurality of Carbon Atoms>

The solid titanium catalyst component (I) of the present invention may further contain an aromatic carboxylic acid ester and/or a compound having two or more ether linkages through a plurality of carbon atoms (hereinafter, also referred to as "catalyst component (c)"). When the solid titanium catalyst component (I) of the present invention contains the catalyst component (c), the activity and stereoregularity may be increased or the molecular weight distribution may be further broadened.

As the catalyst component (c), there may be used, without any limitation, a well-known aromatic carboxylic acid ester or a polyether compound, which is conventionally preferably used for an olefin polymerization catalyst, for example, the compounds as described in Patent Document 2, and Japanese Patent Laid-Open Publication No. 2001-354714.

The aromatic carboxylic acid ester specifically includes an aromatic polyvalent carboxylic acid ester such as phthalic acid esters, in addition to an aromatic carboxylic acid monoester such as a benzoic acid ester, and a toluic acid ester. Among these, an aromatic polyvalent carboxylic acid ester is preferred and a phthalic acid ester is more preferred. As these phthalic acid esters, a phthalic acid alkyl ester such as ethyl phthalate, n-butyl phthalate, isobutyl phthalate, hexyl phthalate, and heptyl phthalate are preferred, and diisobutyl phthalate is particularly preferred.

Further, as the polyether compound, more specifically a compound represented by the following formula (3) is included.

[Chemical Formula 5]

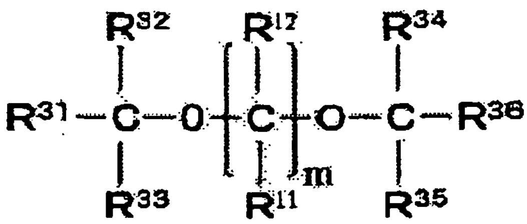

... (3)

In addition, in the formula (3), m is an integer satisfying the condition $1 \leq m \leq 10$ and preferably an integer satisfying the condition $3 \leq m \leq 10$, and $R^{11}$ to $R^{36}$ are each independently a hydrogen atom or a substituent having at least one kind of element selected from carbon, hydrogen, oxygen, fluorine, chlorine, bromine, iodine, nitrogen, sulfur, phosphorus, boron and silicon.

When m is 2 or more, a plurality of $R^{11}$ and $R^{12}$ may be the same or different from each other. Any of $R^{11}$ to $R^{36}$, preferably $R^{11}$ and $R^{12}$ may form a ring other than a benzene ring in combination.

Specific examples of some of these compounds include monosubstituted dialkoxypropanes such as

2-isopropyl-1,3-dimethoxypropane,
2-s-butyl-1,3-dimethoxypropane, and
2-cumyl-1,3-dimethoxypropane;

disubstituted dialkoxypropanes such as

2-isopropyl-2-isobutyl-1,3-dimethoxypropane,
2,2-dicyclohexyl-1,3-dimethoxypropane,
2-methyl-2-isopropyl-1,3-dimethoxypropane,
2-methyl-2-cyclohexyl-1,3-dimethoxypropane,
2-methyl-2-isobutyl-1,3-dimethoxypropane,

2,2-diisobutyl-1,3-dimethoxypropane,
2,2-bis(cyclohexylmethyl)-1,3-dimethoxypropane,
2,2-diisobutyl-1,3-diethoxypropane,
2,2-diisobutyl-1,3-dibutoxypropane,
2,2-di-s-butyl-1,3-dimethoxypropane,
2,2-dineopentyl-1,3-dimethoxypropane,
2-isopropyl-2-isopentyl-1,3-dimethoxypropane, and
2-cyclohexyl-2-cyclohexylmethyl-1,3-dimethoxypropane;
dialkoxyalkanes such as 2,3-dicyclohexyl-l,4-diethoxybutane,
2,3-dicyclohexyl-1,4-diethoxybutane,
2,3-diisopropyl-1,4-diethoxybutane,
2,4-diphenyl-1,5-dimethoxypentane,
2,5-diphenyl-1,5-dimethoxyhexane,
2,4-diisopropyl-1,5-dimethoxypentane,
2,4-diisobutyl-1,5-dimethoxypentane, and
2,4-diisoamyl-1,5-dimethoxypentane; trialkoxyalkanes such as
2-methyl-2-methoxymethyl-1,3-dimethoxypropane,
2-cyclohexyl-2-ethoxymethyl-1,3-diethoxypropane, and
2-cyclohexyl-2-methoxymethyl-1,3-dimethoxypropane;

a dialkoxycycloalkene such as 2,2-diisobutyl-1,3-dimethoxy-4-cyclohexenyl, 2-isopropyl-2-isoamyl-1,3-dimethoxy-4-cyclohexenyl, 2-cyclohexyl-2-methoxymethyl-1,3-dimethoxy-4-cyclohexenyl, 2-isopropyl-2-methoxymethyl-1,3-dimethoxy-4-cyclohexenyl, 2-isobutyl-2-methoxymethyl-1,3-dimethoxy-4-cyclohexenyl, 2-cyclohexyl-2-ethoxymethyl-1,3-dimethoxy-4-cyclohexenyl, 2-isopropyl-2-ethoxymethyl-1,3-dimethoxy-4-cyclohexenyl, and 2-isobutyl-2-ethoxymethyl-1,3-dimethoxy-4-cyclohexenyl.

Among these, 1,3-diethers are preferred, and particularly 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane and 2,2-bis(cyclohexylmethyl)-1,3-dimethoxypropane are preferred.

These compounds may be used alone or in combination of two or more kinds thereof.

It may be considered that the cyclic polyvalent ester group-containing compound (a), the catalyst component (b) and the catalyst component (c) belong to a component which is referred to as an electron donor by those skilled in the art. It is known that the electron donor component shows an effect of increasing stereoregularity of the resulting polymer, an effect of controlling the composition distribution of the resulting copolymer and an effect as a flocculant of controlling the particle shape and particle size of the catalyst particle, while maintaining the high activity of the catalyst.

It is considered that the cyclic polyvalent ester group-containing compound (a) of the present invention also shows to have an effect of further controlling the molecular weight distribution by the electron donor.

In the solid titanium catalyst component (I) used in the present invention, the halogen/titanium (atomic ratio) (that is, the number of moles of halogen atoms/the number of moles of titanium atoms) is 2 to 100 and preferably 4 to 90 desirably.

The cyclic polyvalent ester group-containing compound (a)/titanium (molar ratio) (that is, the number of moles of the cyclic polyvalent ester group-containing compound (a) /the number of moles of titanium atoms) is 0.01 to 100 and preferably 0.2 to 10 desirably.

In the catalyst component (b) and the catalyst component (c), the catalyst component (b)/titanium atoms (molar ratio) is 0 to 100 and preferably 0 to 10 desirably, and the catalyst component (c)/titanium atoms (molar ratio) is 0 to 100 and preferably 0 to 10 desirably.

The magnesium/titanium (atomic ratio) (that is, the number of moles of magnesium atoms/the number of moles of titanium atoms) is 2 to 100 and preferably 4 to 50 desirably.

In addition, the content of a component which may be contained in addition to the cyclic polyvalent ester group-containing compound (a), for example, the catalyst component (b) and the catalyst component (c) is preferably 20% by weight or less and more preferably 10% by weight or less, based on 100% by weight of the cyclic polyvalent ester group-containing compound (a).

As the more detailed preparation conditions of the solid titanium catalyst component (I), the conditions described in, for example, EP 585869 A1 (the specification of European Patent Application Publication No. 0585869), or Patent Document 2, may be preferably employed except that the cyclic polyvalent ester group-containing compound (a) is used.

[Catalyst for Olefin Polymerization]

The catalyst for olefin polymerization according to the present invention is characterized by containing the solid

titanium catalyst component (I) according to the present invention and an organometallic compound catalyst component (II) containing a metal element selected from Group I, Group II and Group XIII of the periodic table.

<Organometallic Compound Catalyst Component (II)>

As the organometallic compound catalyst component (II), a compound containing a metal of Group XIII, for example, an organoaluminum compound, a complex alkylated product of Group I metal and aluminum, an organometallic compound of a metal of Group II, may be used. Among these, an organoaluminum compound is preferred.

As the specific examples of the organometallic compound catalyst component (II), the organometallic compound catalyst components described in well-known documents such as EP 585869A1 may be preferably mentioned.

<Catalyst Component (III)>

In addition, the catalyst for olefin polymerization of the present invention may contain the catalyst component (III) described already where necessary together with the organometallic compound catalyst component (II). The catalyst component (III) preferably includes an organosilicon compound. The organosilicon compound may be exemplified by a compound represented by the following general formula (4).

$$R_nSi(OR')_{4-n} \qquad (4)$$

In the formula, R and R' are a hydrocarbon group, and n is an integer satisfying the condition $0<n<4$.

As the organosilicon compound represented by the general formula (4), there may be specifically used diisopropyldimethoxysilane, t-butylmethyldimethoxysilane, t-butylmethyldiethoxysilane, t-amylmethyldiethoxysilane, dicyclohexyldimethoxysilane,
cyclohexylmethyldimethoxysilane, cyclohexylmethyldiethoxysilane, vinyltrimethoxysilane, vinyltriethoxysilane, t-butyltriethoxysilane, phenyltriethoxysilane, cyclohexyltrimethoxysilane, cyclopentyltrimethoxysilane, 2-methylcyclopentyltrimethoxysilane, cyclopentyltriethoxysilane, dicyclopentyldimethoxysilane, dicyclopentyldiethoxysilane, tricyclopentylmethoxysilane, dicyclopentylmethylmethoxysilane, dicyclopentylethylmethoxysilane, and cyclopentyldimethylethoxysilane.

Among these, vinyltriethoxysilane, diphenyldimethoxysilane, dicyclohexyldimethoxysilane, cyclohexylmethyldimethoxysilane and dicyclopentyldimethoxysilane are preferably used.

In addition, a preferable example of the organosilicon compound further includes a silane compound represented by the following formula (5) described in International Publication WO 2004/016662.

$$Si(OR^a)_3(NR^bR^c) \qquad (5)$$

In the formula (5), $R^a$ is a hydrocarbon group having 1 to 6 carbon atoms. $R^a$ includes an unsaturated or saturated aliphatic hydrocarbon group having 1 to 6 carbon atoms and particularly preferably includes a hydrocarbon group having 2 to 6 carbon atoms. $R^a$ specifically includes a methyl group, an ethyl group, an n-propyl group, an isopropyl group, an n-butyl group, an isobutyl group, a sec-butyl group, an n-pentyl group, an isopentyl group, a cyclopentyl group, an n-hexyl group, and a cyclohexyl group, among which an ethyl group is particularly preferable.

In the formula (5), $R^b$ is a hydrocarbon group having 1 to 12 carbon atoms or a hydrogen atom and includes an unsaturated or saturated aliphatic hydrocarbon group having 1 to 12 carbon atoms, or a hydrogen atom. $R^b$ specifically includes a hydrogen atom, a methyl group, an ethyl group, an n-propyl group, an isopropyl group, an n-butyl group, an isobutyl group, a sec-butyl group, an n-pentyl group, an isopentyl group, a cyclopentyl group, an n-hexyl group, a cyclohexyl group, and an octyl group, among which an ethyl group is particularly preferable.

In the formula (5), $R^c$ is a hydrocarbon group having 1 to 12 carbon atoms and includes an unsaturated or saturated aliphatic hydrocarbon group having 1 to 12 carbon atoms, or a hydrogen atom. $R^c$ specifically includes a methyl group, an ethyl group, an n-propyl group, an isopropyl group, an n-butyl group, an isobutyl group, a sec-butyl group, an n-pentyl group, an isopentyl group, a cyclopentyl group, an n-hexyl group, a cyclohexyl group, and an octyl group, among which an ethyl group is particularly preferable.

The compound represented by the formula (5) specifically includes dimethylaminotriethoxysilane, diethylaminotriethoxysilane, diethylaminotrimethoxysilane, diethylaminotriethoxysilane, diethylaminotri-n-propoxysilane, di-n-propylaminotriethoxysilane, methyl-n-propylaminotriethoxysilane, t-butylaminotriethoxysilane, ethyl-n-propylaminotriethoxysilane, ethyl-isopropylaminotriethoxysilane and methylethylaminotriethoxysilane.

Further, other examples of the organosilicon compound include a compound represented by the following formula (6).

$RNSi(OR^a)_3$ (6)

In the formula (6), RN is a cyclic amino group, and the cyclic amino group includes, for example, a perhydroquinolino group, a perhydroisoquinolino group, a 1,2,3,4-tetrahydroquinolino group, a 1,2,3,4-tetrahydroisoquinolino group, and an octamethyleneimino group. As the specific examples of the compound represented by the formula (6), there may be mentioned (perhydroquinolino)triethoxysilane, (perhydroisoquinolino)triethoxysilane, (1,2,3,4-tetrahydroquinolino)triethoxysilane, (1,2,3,4-tetrahydroisoquinolino)triethoxysilane, and octamethyleneiminotriethoxysilane.

These organosilicon compounds may be used in combination of two or more kinds thereof.

Further, as other useful compounds as the catalyst component (III), a polyether compound which is described as an example of the aromatic carboxylic acid ester and/or a compound having two or more ether linkages through a plurality of carbon atoms (the catalyst component (c)) may be preferably mentioned.

Among these polyether compounds, 1,3-diethers are preferred, and particularly 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane and 2,2-bis(cyclohexylmethyl)-1,3-dimethoxypropane are preferred.

These compounds may be used alone or in combination of two or more kinds thereof.

In addition, the catalyst for olefin polymerization of the present invention may contain other components useful for olefin polymerization where necessary, in addition to each component as mentioned above. The other component includes, for example, a support such as silica, an antistatic agent, a particle flocculating agent, a storage stabilizer and others.

[Olefin Polymerization Method]

The olefin polymerization method according to the present invention is characterized in that the olefin polymerization is carried out using a catalyst for olefin polymerization of the present invention. In the present invention, the term "polymerization" may include the meaning of copolymerization such as random copolymerization, and block copolymerization, in addition to homopolymerization.

In the olefin polymerization method of the present invention, the polymerization may also be carried out in the presence of a prepolymerization catalyst which is obtained by prepolymerization of an $\alpha$-olefin in the presence of the catalyst for olefin polymerization of the present invention. This prepolymerization is carried out by prepolymerization of an $\alpha$-olefin in an amount of 0.1 to 1000 g, preferably 0.3 to 500 g and particularly preferably 1 to 200 g, based on 1 g of the catalyst for olefin polymerization.

In the prepolymerization, a catalyst having a concentration higher than the catalyst concentration in the polymerization system may be used.

The concentration of the solid titanium catalyst component (I) in the prepolymerization is desirably in the range of typically approximately 0.001 to 200 mmol, preferably approximately 0.01 to 50 mmol, and particularly preferably 0.1 to 20 mmol, in terms of titanium atom, based on 1 liter of a liquid medium.

The amount of the organometallic compound catalyst component (II) in the prepolymerization may be such that 0.1 to 1000 g and preferably 0.3 to 500 g of the polymer is produced based on 1 g of the solid titanium catalyst component (I), and the amount is desirably typically approximately 0.1 to 300 mol, preferably approximately 0.5 to 100 mol, and particularly preferably 1 to 50 mol, based on 1 mol of the titanium atom in the solid titanium catalyst component (I).

In the prepolymerization, the catalyst component (III) may be used where necessary, and in this case, these components are used in an amount of 0.1 to 50 mol, preferably 0.5 to 30 mol, and more preferably 1 to 10 mol, based on 1 mol of the titanium atom in the solid titanium catalyst component (I).

The prepolymerization may be carried out under a mild condition by adding an olefin and the catalyst components to an inert hydrocarbon medium.

In this case, as the inert hydrocarbon medium to be used, there may be specifically mentioned an aliphatic hydrocarbon such as propane, butane, pentane, hexane, heptane, octane, decane, dodecane, and kerosene; an alicyclic hydrocarbon such as cycloheptane, methylcycloheptane, 4-cycloheptane, and methyl-4-cycloheptane; an aromatic hydrocarbon such as benzene, toluene, and xylene; a halogenated hydrocarbon such as ethylene chloride, chlorobenzene; a mixture thereof.

Among these inert hydrocarbon media, an aliphatic hydrocarbon is particularly preferably used. In this manner, when the inert hydrocarbon medium is used, the prepolymerization is preferably carried out batchwise.

On the other hand, the prepolymerization may be carried out by using an olefin itself as a solvent, or may be carried out in a state where there is substantially no solvent. In this case, the prepolymerization is preferably carried out continuously.

The olefin used in the prepolymerization may be the same or different from that used in the polymerization described later, and specifically propylene is preferred.

The temperature at the time of prepolymerization is desirably in the range of typically approximately -20 to

+100°C, preferably approximately -20 to +80°C and more preferably 0 to +40°C.

Next, there will be explained the polymerization which is carried out after the prepolymerization described above or without the prepolymerization.

As the olefin which may be used (that is, polymerized) in the polymerization, there may be mentioned an α-olefin having 3 to 20 carbon atoms, for example, a linear olefin such as propylene, 1-butene, 1-pentene, 1-hexene, 1-octene, 1-decene, 1-dodecene, 1-tetradecene, 1-hexadecene, 1-octadecene, and 1-eicosene; and a branched olefin such as 4-methyl-1-pentene, 3-methyl-1-pentene, and 3-methyl-1-butene, and preferably propylene, 1-butene, 1-pentene, 4-methyl-1-pentene and 3-methyl-1-butene are used. Further, particularly propylene, 1-butene, 4-methyl-1-pentene and 3-methyl-1-butene are preferred from the viewpoint that the advantages of a polymer having a broader molecular weight distribution are easily developed in a resin with high rigidity.

Ethylene; an aromatic vinyl compound such as styrene, and allylbenzene; an alicyclic vinyl compound such as vinylcyclohexane, and vinylcycloheptane may be also used together with these α-olefins. Further, a compound having a polyunsaturated bond such as conjugated dienes or nonconjugated dienes, for example, dienes such as cyclopentene, cycloheptene, norbornene, tetracyclododecene, isoprene, and butadiene may be also used as a polymerization raw material together with ethylene and an α-olefin. These compounds may be used alone or in combination of two or more kinds thereof. (Hereinafter, the olefins used together with the ethylene or the "α-olefin having 3 to 20 carbon atoms" may be also referred to as "other olefins").

Among the other olefins, ethylene and an aromatic vinyl compound are preferred. In addition, the other olefins such as ethylene may be used in combination if used in a small amount, for example, 10% by weight or less and preferably 5% by weight or less, based on 100% by weight of the total amount of olefins.

In the present invention, the prepolymerization and the polymerization may be carried out by any of liquid phase polymerization such as bulk polymerization, solution polymerization, and suspension polymerization, or vapor phase polymerization.

When slurry polymerization is employed as a reaction pattern of the polymerization, an inert hydrocarbon used at the time of the prepolymerization or an olefin which is liquid at a reaction temperature may be used as a reaction solvent.

In the polymerization in the polymerization method of the present invention, the solid titanium catalyst component (I) is used in an amount of usually approximately 0.0001 to 0.5 mmol and preferably about 0.005 to 0.1 mmol, in terms of titanium atom, based on 1 liter of the polymerization volume. Further, the organometallic compound catalyst component (II) is used in an amount of usually approximately 1 to 2000 mol, preferably approximately 5 to 500 mol, more preferably 10 to 350 mol, further more preferably 30 to 350 mol and particularly preferably 50 to 350 mol, based on 1 mol of the titanium atom in the prepolymerization catalyst component in the polymerization system. The catalyst component (III), if used, is used in an amount of 0.001 to 50 mol, preferably 0.01 to 30 mol and particularly preferably 0.05 to 20 mol, based on the amount of the organometallic compound catalyst component (II).

If the polymerization is carried out in the presence of hydrogen, the molecular weight of the resulting polymer may be controlled and a polymer with a high melt flow rate is obtained.

In the polymerization in the present invention, the polymerization temperature of an olefin is in the range of usually approximately 20 to 200°C, preferably approximately 30 to 100°C and more preferably 50 to 90°C. The pressure is set to be in the range of usually normal pressure to 100 kgf/cm$^2$ (9.8 MPa) and preferably approximately 2 to 50 kgf/cm$^2$ (0.20 to 4.9 MPa). In the polymerization method of the present invention, the polymerization may be carried out by any of batchwise process, semi-continuous process and continuous process. Further, the polymerization may be carried out in two or more stages by changing the reaction conditions. When the multi-stage polymerization is carried out, the molecular weight distribution of the olefin polymer may further be broadened.

The olefin polymer thus obtained may be any one of a homopolymer, a random copolymer, or a block copolymer.

If the polymerization of an olefin, in particular the polymerization of propylene is carried out by using the catalyst for olefin polymerization, a propylene polymer with high stereoregularity which has a content of the decane-insoluble components of 70% or more, preferably 85% or more and particularly preferably 90% or more may be obtained.

Further, according to the olefin polymerization method of the present invention, a polyolefin, in particular polypropylene having a broad molecular weight distribution may be obtained even when the polymerization is carried out in a small number of stages, for example, a single stage rather than a multi-stage method. The olefin polymerization method of the present invention is particularly characterized in that an olefin polymer having a higher ratio of the high molecular weight components and a lower ratio of the low molecular weight components (referred to as "sticky components") may frequently be obtained as compared with a conventional olefin polymer having an equivalent melt flow rate (MFR). These characteristics can be confirmed by gel permeation chromatography (GPC) measurement described later, and a polymer having both of a high Mw/Mn value and a high Mz/Mw value may be obtained.

The conventional polypropylene, which is obtained by using a solid titanium catalyst component containing magnesium, titanium, halogen and an electron donor, generally has an Mw/Mn value of 5 or less and an Mz/Mw value of less than 4, which are indices of the molecular weight distribution as determined by GPC measurement, for example, in the region where it has an MFR of 1 to 10 g/10 min. However, when employing the olefin polymerization method of

the present invention, an olefin polymer having an Mw/Mn value of 6 to 30 and preferably 7 to 20 may be obtained under the same polymerization conditions as described above. Further, an olefin polymer having an Mz/Mw value of preferably 4 to 15 and more preferably 4. 5 to 10 may be obtained. Particularly, according to the olefin polymerization method of the present invention, a polymer having a high Mz/Mw value is frequently obtained.

It is commonly known to those skilled in the art that a polypropylene having a high Mw/Mn value is excellent in moldability and rigidity. On the other hand, a high Mz/Mw value indicates a high content of high molecular weight components, and it is expected that the resulting polypropylene is likely to have a high melt tension and excellent moldability.

When using the olefin polymerization method of the present invention, a polymer having a broad molecular weight distribution without carrying out the multi-stage polymerization may be obtained, therefore, the polymer production equipment may be made to be simpler. In addition, when applying the conventional multi-stage polymerization, it is expected that a polymer more excellent in melt tension and moldability may be obtained.

As another methods for obtaining a polymer having a broad molecular weight distribution, there are a method of dissolving and mixing and a method of dissolving and kneading polymers having different molecular weights. However, the polymers obtained by these methods may be insufficient in improvement of melt tension or moldability, in spite that the operations are relatively complicated. The reason for this is presumed that the polymers having different molecular weights are basically difficult to be mixed with each other. On the other hand, since the polymers obtained by the olefin polymerization method of the present invention are a mixture of polymers having different molecular weights in the extremely broad range of molecular weights in a catalytic level, that is, in a nano-level, they are expected to have high melt tension and excellent moldability.

Hereinafter, the present invention will be explained with reference to Examples.

In the following Examples, the bulk density, the melt flow rate, the content of the decane-soluble (insoluble) components, the molecular weight distribution of the propylene polymer were measured by the methods described below.

(1) Bulk Density:

The bulk density was measured in accordance with JIS K-6721.

(2) Melt Flow Rate (MFR) :

The melt flow rate (MFR) was measured in accordance with ASTM D 1238E at a measurement temperature of 230°C in the case of a propylene polymer, and 260°C in the case of a 4-methyl-1-pentene polymer.

(3) Amount of Decane-Soluble (Insoluble) Components:

Into a glass container for measurement, approximately 3 g (measurement was made down to $10^{-4}$ g, and the weight was represented by b (g) in the following equation) of a propylene polymer, 500 mL of decane and a small amount of a heat-resistant stabilizer soluble in decane were charged. The mixture was heated to 150°C over 2 hours while stirring with a stirrer under a nitrogen atmosphere to dissolve the propylene polymer, maintained at 150°C for 2 hours and then slowly cooled to 23°C over 8 hours. The liquid containing the precipitates of the resulting propylene polymer was filtered under reduced pressure with a glass filter of a 25G-4 specification manufactured by Iwata Glass Co., Ltd. 100 mL of the filtrate was collected and dried under reduced pressure to obtain a portion of the decane-soluble components, the weight of which was measured down to $10^{-4}$ g (this weight was represented by a (g) in the following equation). After the operation, the amount of the decane-soluble components was determined by the following equation.

Content of decane-soluble components=100×(500×a)/(100×b)

Content of decane-insoluble components=100-100×(500×a)/(100×b)

(4) Molecular Weight Distribution:

Liquid chromatograph: ALC/GPC 150-C plus type (Integrated type differential refractometer-detector), manufactured by Waters Corporation
Column: GMH6-HT×2 and GMH6-HTL×2 connected in series, manufactured by Tosoh Corporation

The Mw/Mn value and the Mz/Mw value were calculated by analyzing the chromatogram obtained by the measurement under the following conditions using a well-known method. The measurement time per one sample was 60 minutes.

Mobile phase medium: o-dichlorobenzene
Flow rate: 1.0 mL/min
Measurement temperature: 140°C
Method for preparing calibration curve: Using standard polystyrene sample
Sample concentration: 0.10% (w/w)
Sample solution volume: 500 μL

In addition, as the compound corresponding to the cyclic polyvalent ester group-containing compound (a) of the present invention, a synthetic compound manufactured by Azuma Co., Ltd. was used unless otherwise specifically mentioned. The purity of cis and trans isomers was 95% or more.

Example 1

(Preparation of Solid Titanium Catalyst Component (A))

Into a high speed stirring device having an internal volume of 2 liters (manufactured by PRIMIX Corporation) which was sufficiently purged with nitrogen, 700 mL of purified decane, 10 g of commercially available magnesium chloride, 24.2 g of ethanol and 3 g of Leodol SP-S20 (trade name) (sorbitan distearate, manufactured by Kao Corporation) were charged. The temperature of the system was elevated while stirring the suspension and the suspension was stirred at 120°C at 800 rpm for 30 minutes. Subsequently, the suspension was transferred to a 2-liter glass flask (equipped with a stirrer) which was previously charged with 1 liter of purified decane precooled to -10°C by using a Teflon (registered trade mark) tube having an inner diameter of 5 mm under high speed stirring so as not to generate precipitates. The solid generated by the transportation of the liquid was filtered and was sufficiently washed with purified n-hexane to obtain a solid adduct in which 2.8 mol of ethanol is coordinated to 1 mol of magnesium chloride.

Into 200 mL of titanium tetrachloride maintained at -20°C, 46.2 mmol of the solid adduct suspended in 30 mL of decane, in terms of magnesium atom was wholly introduced while stirring. The temperature of the mixture solution was elevated to 80°C over 5 hours. When the temperature reached 80°C, 3,6-dimethylcyclohexyl-1,2-benzoate (Me2CH) was added in an amount of 0.175 mol based on 1 mol of a magnesium atom in the solid adduct, and then the resulting mixture solution was heated to 120°C over 40 minutes. The temperature was maintained at 120°C for 65 minutes while stirring.

After the reaction of 65 minutes was completed, a solid portion was collected by hot filtration. This solid portion was resuspended in 200 mL of titanium tetrachloride and was heated to 130°C, and the resulting solution was maintained at the same temperature for 15 minutes while stirring. After the reaction of 15 minutes was completed, a solid portion was collected again by hot filtration. The solid portion collected was sufficiently washed with decane and heptane at 100°C until a free titanium compound was no longer detected in the washing solution.

A solid titanium catalyst component (A) was obtained by the operations described above.

(Polymerization)

Into a polymerization vessel with an internal volume of 2 liters, 500 g of propylene and 1 NL of hydrogen were added at room temperature, and then 0.5 mmol of triethylaluminum, 0.1 mmol of cyclohexylmethyldimethoxysilane and 0.004 mmol (in terms of titanium atom) of the solid titanium catalyst component (A) were added. The mixture was maintained at room temperature for 15 minutes and then the internal temperature of the polymerization vessel was rapidly elevated to 70°C. After the polymerization was conducted at 70°C for 1 hour, a small amount of methanol was added to stop the reaction and propylene was purged. The resulting polymer particles were further dried under reduced pressure overnight at 80°C.

The activity, MFR, amount of the decane-insoluble components, bulk density and molecular weight distribution (Mw/Mn and Mz/Mw) are shown in Table 1.

Example 2

(Preparation of Solid Titanium Catalyst Component(B))

A solid titanium catalyst component (B) was obtained in the same manner as in Example 1 except for using cyclohexyl-1,2-dibenzoate (CH) instead of 3,6-dimethylcyclohexyl-1,2-dibenzoate.

(Polymerization)

The propylene polymerization was carried out in the same manner as in Example 1 except for using the solid titanium catalyst component (B) instead of the solid titanium catalyst component (A). The results are shown in Table 1.

Example 3

(Polymerization)

The propylene polymerization was carried out in the same manner as in Example 1 except for using 7.5 L of hydrogen. The results are shown in Table 1.

Example 4

(Polymerization)

The propylene polymerization was carried out in the same manner as in Example 2 except for using 7.5 L of hydrogen. The results are shown in Table 1.

Comparative Example 1

(Synthesis of Solid Titanium Catalyst Component (C))

A solid titanium catalyst component (C) was obtained in the same manner as in Example 1 except that 0.15 mmol of diisobutyl phthalate (DIPB) (reagent of special grade, manufactured by Wako Pure Chemical Industries, Ltd.) based on 1 mol of magnesium atom was used instead of 3,6-dimethylcyclohexyl-1,2-dibenzoate, the reaction at 120°C was changed to 90 minutes and the reaction at 130°C was changed to 45 minutes.

(Polymerization)

The propylene polymerization was carried out in the same manner as in Example 1 except for using the solid titanium catalyst component (C) instead of the solid titanium catalyst component (A). The results are shown in Table 1.

[Table 1]

| | Activity /g/g-Cat | Hydrogen/L | MFR/g/10 Min | C10 insol./wt% | BD/g/mL | Mw/Mn | Mz/Mw |
|---|---|---|---|---|---|---|---|
| Example 1 | 38,700 | 1 | 4.5 | 96.0 | 0.45 | 9.6 | 3.6 |
| Example 2 | 17,800 | 1 | 8.8 | 92.4 | 0.43 | 11.2 | 4.2 |
| Example 3 | 44,500 | 7.5 | 195 | 95.8 | 0.42 | 14.4 | 3.8 |
| Example 4 | 19,400 | 7.5 | 220 | 93.9 | 0.42 | 13.7 | 4.2 |
| Comparative Example 1 | 22,100 | 1 | 5.0 | 98.5 | 0.49 | 4.3 | 3.0 |

(continued)

| | Activity /g/g-Cat | Hydrogen/L | MFR/g/10 Min | C10 insol./wt% | BD/g/mL | Mw/Mn | Mz/Mw |
|---|---|---|---|---|---|---|---|
| Comparative Example 2 | 21,800 | 7.5 | 92 | 98.1 | 0.50 | - | - |
| C10 insol. : Amount of decane-insoluble components<br>BD : Bulk density | | | | | | | |

Comparative Example 2

(Polymerization)

The propylene polymerization was carried out in the same manner as in Comparative Example 1 except for using 7.5 L of hydrogen. The results are shown in Table 1.

As described above, it is found that when a catalyst for olefin polymerization containing a solid titanium catalyst component of the present invention is used, an olefin polymer having a broader molecular weight distribution as compared with an olefin polymerization catalyst containing a solid titanium catalyst component of the Comparative Examples which has been conventionally used is obtained. Such an olefin polymer is also advantageous in obtaining a resin having high melt flowability that is recently desired in the application, for example, of the injection molding for automobiles.

The relationship between the used amount of hydrogen and MFR in the results described above is shown in Fig.1. It has been known by those skilled in the art that the relationship between the used amount of hydrogen and MFR shows an excellent linearity on a graph when their respective logarithms are plotted. It is shown that when the multi-stage polymerization is carried out for the purpose of further broadening the molecular weight distribution, a catalyst having a steep slope on the graph may significantly change the molecular weight with a small change in the used amount of hydrogen. That is, it is advantageous for broadening the molecular weight distribution.

When a solid titanium catalyst component containing 3,6-dimethylcyclohexyl-1,2-dibenzoate (Me2CH, solid line) having a substituent in the cyclic skeleton is used, the slope of the graph showing the relation between the used amount of hydrogen and MFR is more steep compared to the case of using a solid titanium catalyst component containing cyclohexyl-1,2-dibenzoate (CH, dashed line) having no substituent. Thus, it is found that the solid titanium catalyst component containing 3,6-dimethylcyclohexyl-1,2-dibenzoate is advantageous for further broadening the molecular weight distribution especially in the multi-stage polymerization and is also more preferable in that the results with high activity and high stereoregurality are obtained.

As mentioned above, when a solid titanium catalyst component of the present invention is used, an olefin polymer having an extremely broad molecular weight distribution may be obtained. Especially when a solid titanium catalyst component containing a cyclic polyvalent ester group-containing compound having a substituent in the cyclic portion is used, an olefin polymer having the same broad molecular weight distribution and higher stereoregularity with extremely high activity may be obtained, and it is advantageous in obtaining an olefin polymer having a broader molecular weight distribution when a multi-stage polymerization is employed at the same time.

**Claims**

1. A solid titanium catalyst component (I), comprising titanium, magnesium, halogen and a cyclic polyvalent ester group-containing compound (a) specified by the following formula (1) :

[Chemical Formula 1]

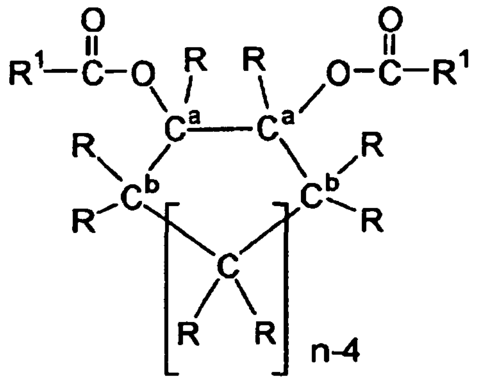

(1)

wherein n is an integer of 5 to 10; $C^a$-$C^a$ and $C^a$-$C^b$ are C-C; a plurality of $R^1$s are each independently a monovalent hydrocarbon group having 1 to 20 carbon atoms; a plurality of Rs are each independently an atom or a group selected from a hydrogen atom, a hydrocarbon group having 1 to 20 carbon atoms, a halogen atom, a nitrogen-containing group, an oxygen-containing group, a phosphorus-containing group, a halogen-containing group and a silicon-containing group, and may be mutually bonded to form a ring; and a double bond may be contained in a skeleton of the ring formed by the mutual bonding of Rs, and when two $C^a$s to which $OCOR^1$ is attached are contained in the skeleton of the ring, the number of carbon atoms constituting the skeleton of the ring is 5 to 10.

2. The solid titanium catalyst component (I) according to claim 1, wherein at least one among the plurality of Rs directly bonding to $C^b$ is a group other than a hydrogen atom in the formula (1).

3. The solid titanium catalyst component (I) according to either claim 1 or claim 2, wherein bonds between carbon atoms in the cyclic skeleton are all single bonds in the formula (1).

4. The solid titanium catalyst component (I) according to any one of claims 1 to 3, wherein the cyclic skeleton is composed of six carbon atoms in the formula (1).

5. The solid titanium catalyst component (I) according to any one of claims 1 to 4, wherein the cyclic polyvalent ester group-containing compound (a) is a compound represented by the following formula (1a):

[Chemical Formula 2]

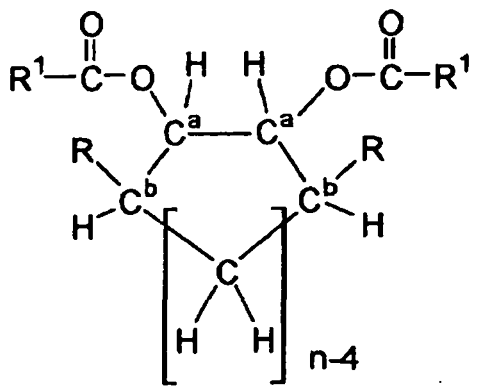

(1a)

wherein n is an integer of 5 to 10; $C^a$-$C^a$ and $C^a$-$C^b$ are C-C; a plurality of $R^1$s are each independently a monovalent hydrocarbon group having 1 to 20 carbon atoms; a plurality of Rs are each independently an atom or a group selected from a hydrogen atom, a hydrocarbon group having 1 to 20 carbon atoms, a halogen atom, a nitrogen-containing group, an oxygen-containing group, a phosphorus-containing group, a halogen-containing group and a silicon-containing group, and may be mutually bonded to form a ring; and a double bond may be contained in the skeleton of the ring formed by the mutual bonding of Rs, and when two $C^a$s are contained in the skeleton of the ring, the number of carbon atoms constituting the skeleton of the ring is 5 to 10.

**6.** A catalyst for olefin polymerization, comprising:

the solid titanium catalyst component (I) according to any one of claims 1 to 5; and
an organometallic compound catalyst component (II) containing a metal element selected from Group I, Group II and Group XIII of the periodic table.

**7.** The catalyst for olefin polymerization according to claim 6, further containing an electron donor (III).

**8.** An olefin polymerization method, comprising carrying out olefin polymerization in the presence of the catalyst for olefin polymerization according to claim 6 or 7.

**Patentansprüche**

**1.** Fester Titankatalysatorbestandteil (I), umfassend Titan, Magnesium, Halogen und eine zyklische polyvalente Estergruppen-enthaltende Verbindung (a), dargestellt durch die folgende Formel (1):

[chemische Formel 1]

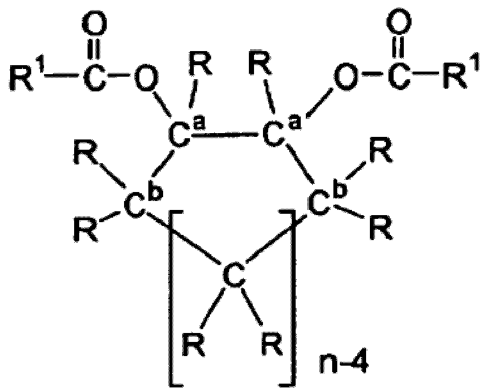

(1)

wobei n eine ganze Zahl von 5 bis 10 ist; $C^a$-$C^a$ und $C^a$-$C^b$ C-C sind; eine Vielzahl von $R^1$ sind jeweils unabhängig voneinander eine monovalente Kohlenwasserstoffgruppe mit 1 bis 20 Kohlenstoffatomen; eine Vielzahl von R sind jeweils unabhängig voneinander ein Atom oder eine Gruppe ausgewählt aus einem Wasserstoffatom, einer Kohlenwasserstoffgruppe mit 1 bis 20 Kohlenstoffatomen, einen Halogenatom, einer Stickstoff-enthaltenden Gruppe, einer Sauerstoff-enthaltenden Gruppe, einer Phosphor-enthaltenden Gruppe, einer Halogen-enthaltenden Gruppe und einer Silizium-enthaltenden Gruppe, und gemeinsam verbunden sein können, um einen Ring zu bilden; und eine Doppelbindung kann in einem Gerüst des durch die gemeinsame Bindung von R gebildetem Ring enthalten sein, und wenn zwei $C^a$, an welche $OCOR^1$ angefügt ist, in dem Gerüst des Rings enthalten sind, ist die Anzahl an Kohlenstoffatomen, die das Gerüst des Ringes darstellen, 5 bis 10.

**2.** Fester Titankatalysatorbestandteil (I) nach Anspruch 1, wobei mindestens eines von der Vielzahl von direkt mit $C^b$ verbundenen R eine andere Gruppe als ein Wasserstoffatom in der Formel (1) darstellt.

**3.** Fester Titankatalysatorbestandteil (I) nach entweder Anspruch 1 oder Anspruch 2, wobei Bindungen zwischen Kohlenstoffatomen in dem zyklischen Gerüst alle Einfachbindungen in der Formel (1) darstellen.

**4.** Fester Titankatalysatorbestandteil (I) nach einem beliebigen der Ansprüche 1 bis 3, wobei das zyklische Gerüst aus sechs Kohlenstoffatomen in der Formel (1) zusammengesetzt ist.

**5.** Fester Titankatalysatorbestandteil (I) nach einem beliebigen der Ansprüche 1 bis 4, wobei die zyklische polyvalente Estergruppen-enthaltende Verbindung (a) eine Verbindung ist, dargestellt durch die folgende Formel (1a):

[chemische Formel 1a]

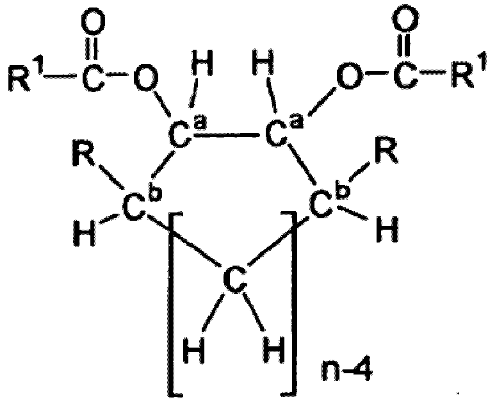

(1a)

wobei n eine ganze Zahl von 5 bis 10 ist; $C^a$-$C^a$ und $C^a$-$C^b$ C-C sind; eine Vielzahl von $R^1$ jeweils unabhängig voneinander eine monovalente Kohlenwasserstoffgruppe mit 1 bis 20 Kohlenstoffatomen sind; eine Vielzahl von R jeweils unabhängig voneinander ein Atom oder eine Gruppe ausgewählt aus einem Wasserstoffatom, einer Kohlenwasserstoffgruppe mit 1 bis 20 Kohlenstoffatomen, einem Halogenatom, einer Stickstoff-enthaltenden Gruppe, einer Sauerstoff-enthaltenden Gruppe, einer Phosphor-enthaltenden Gruppe, einer Halogen-enthaltenden Gruppe und einer Silizium-enthaltenden Gruppe sind, und gemeinsam verbunden sein können, um einen Ring zu bilden; und eine Doppelbindung kann in dem Gerüst des durch die gemeinsame Bindung von R gebildeten Rings enthalten sein, und wenn zwei $C^a$ in dem Gerüst des Rings enthalten sind, ist die Anzahl von Kohlenstoffatomen, die das Gerüst des Ringes darstellen, 5 bis 10.

**6.** Katalysator zur Olefinpolymerisation, umfassend:

den festen Titankatalysatorbestandteil (I) gemäß einem beliebigen der Ansprüche 1 bis 5; und
einen organometallischen Verbindungskatalysatorbestandteil (II), enthaltend ein Metallelement ausgewählt aus der Gruppe I, Gruppe II und Gruppe XIII des Periodensystems.

**7.** Katalysator zur Olefinpolymerisation nach Anspruch 6, des weiteren enthaltend einen Elektronendonor (III).

**8.** Olefinpolymerisationsverfahren, umfassend das Durchführen von Olefinpolymerisation in Gegenwart des Katalysators zur Olefinpolymerisation gemäß Anspruch 6 oder 7.

## Revendications

**1.** Composant de catalyseur au titane solide (I), comprenant du titane, du magnésium, un halogène et un composé contenant des groupes ester multivalent cyclique (a) spécifié par la formule (1) suivante :

[Formule chimique 1]

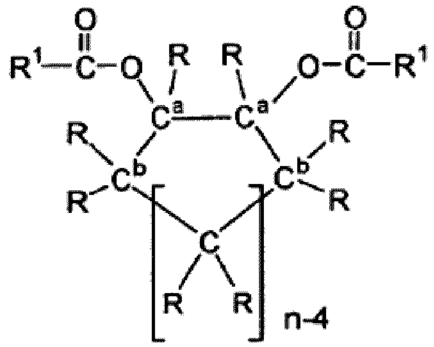

(1)

où n est un entier de 5 à 10 ; $C^a$-$C^a$ et $C^a$-$C^b$ sont C-C ; une pluralité de $R^1$ sont chacun indépendamment un groupe hydrocarboné monovalent ayant 1 à 20 atomes de carbone ; une pluralité de R sont chacun indépendamment un atome ou un groupe choisi parmi un atome d'hydrogène, un groupe hydrocarboné ayant 1 à 20 atomes de carbone, un atome d'halogène, un groupe contenant de l'azote, un groupe contenant de l'oxygène, un groupe contenant du phosphore, un groupe contenant un halogène et un groupe contenant du silicium, et peuvent être liés mutuellement pour former un cycle ; et une double liaison peut être contenue dans un squelette du cycle formé par la liaison mutuelle de R, et quand deux $C^a$ auxquels $OCOR^1$ est lié sont contenus dans le squelette du cycle, le nombre d'atomes de carbone constituant le squelette du cycle est 5 à 10.

2. Composant de catalyseur au titane solide (I) selon la revendication 1, où au moins l'un parmi la pluralité de R liés directement à $C^b$ est un groupe différent d'un atome d'hydrogène dans la formule (1).

3. Composant de catalyseur au titane solide (I) selon la revendication 1 ou la revendication 2, où les liaisons entre les atomes de carbone dans le squelette cyclique sont toutes des simples liaisons dans la formule (1).

4. Composant de catalyseur au titane solide (I) selon l'une quelconque des revendications 1 à 3, où le squelette cyclique est composé de six atomes de carbone dans la formule (1).

5. Composant de catalyseur au titane solide (I) selon l'une quelconque des revendications 1 à 4, où le composé contenant des groupes ester multivalent cyclique (a) est un composé représenté par la formule (la) suivante :

[Formule chimique 2]

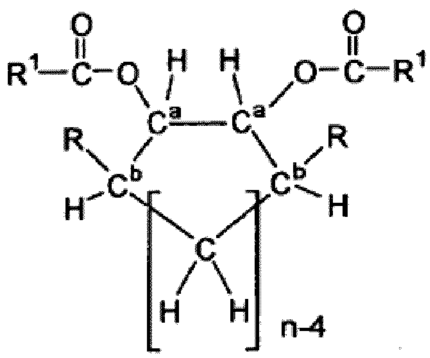

(1a)

où n est un entier de 5 à 10 ; $C^a$-$C^a$ et $C^a$-$C^b$ sont C-C ; une pluralité de $R^1$ sont chacun indépendamment un groupe hydrocarboné monovalent ayant 1 à 20 atomes de carbone ; une pluralité de R sont chacun indépendamment un atome ou un groupe choisi parmi un atome d'hydrogène, un groupe hydrocarboné ayant 1 à 20 atomes de carbone, un atome d'halogène, un groupe contenant de l'azote, un groupe contenant de l'oxygène, un groupe contenant du phosphore, un groupe contenant un halogène et un groupe contenant du silicium, et peuvent être liés mutuellement

pour former un cycle ; et une double liaison peut être contenue dans un squelette du cycle formé par la liaison mutuelle de R, et quand deux $C^a$ sont contenus dans le squelette du cycle, le nombre d'atomes de carbone constituant le squelette du cycle est 5 à 10.

**6.** Catalyseur pour la polymérisation d'oléfines comprenant :

le composant de catalyseur au titane solide (I) selon l'une quelconque des revendications 1 à 5 ; et
un composant de catalyseur à composé organométallique (II) contenant un élément métallique choisi parmi le groupe I, le groupe II et le groupe XIII du tableau périodique.

**7.** Catalyseur pour la polymérisation d'oléfines selon la revendication 6, contenant en outre un donneur d'électrons (III).

**8.** Procédé de polymérisation d'oléfines comprenant la mise en oeuvre d'une polymérisation d'oléfines en présence du catalyseur pour la polymérisation d'oléfines selon la revendication 6 ou 7.

[Figure 1]

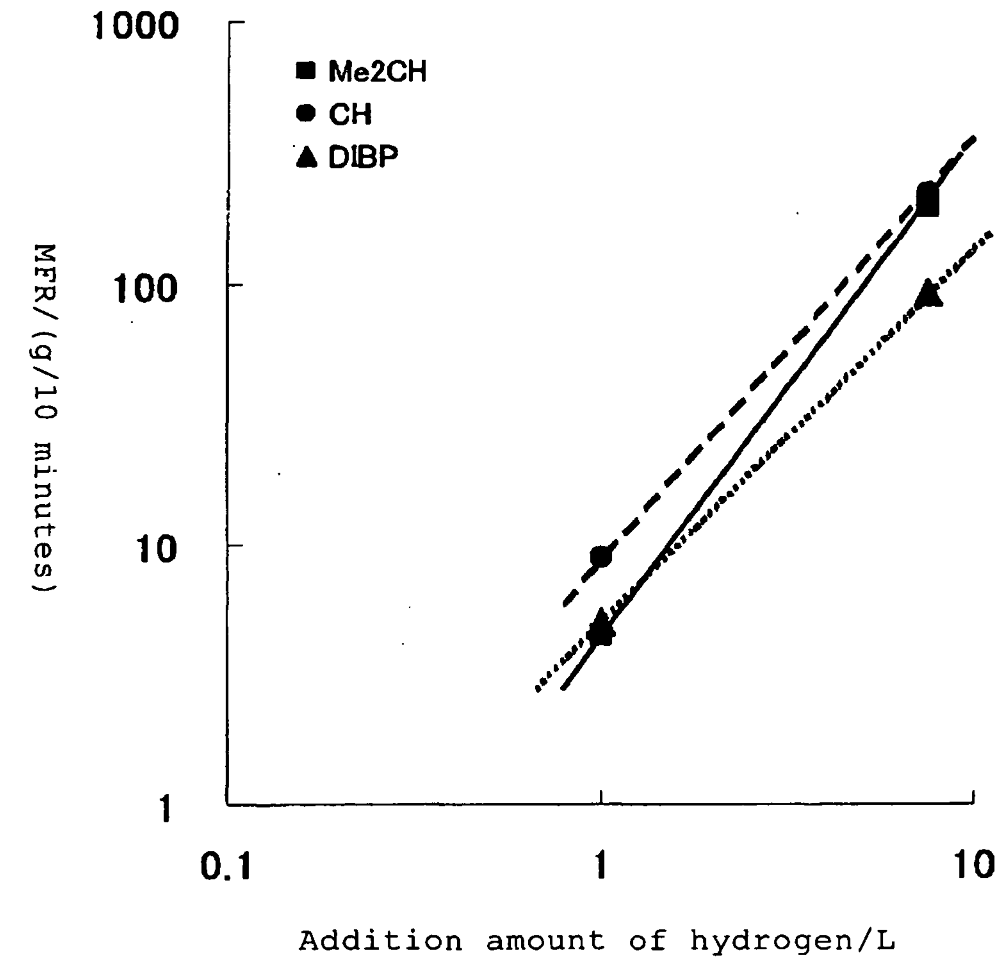
1000
100
10
1
0.1
1
10
Me2CH
CH
DIBP
MFR/(g/10 minutes)
Addition amount of hydrogen/L

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S5763310 B
- JP H05170843 B
- JP H037703 B
- WO 2001057099 A
- WO 200063261 A
- WO 200230998 A
- JP 2005517746 A
- JP 2001354714 A
- EP 585869 A1
- EP 0585869 A
- WO 2004016662 A